# EUROPÄISCHE PATENTANMELDUNG

(11) **EP 1 345 015 A2**
(43) Veröffentlichungstag der Anmeldung: **17.09.2003**
(21) Anmeldenummer: 03005239.3
(22) Anmeldetag: 10.03.2003
(51) Int. Cl.: G01G 3/14

(54) **Kraftmesselement für eine Waage und Waage**

(30) Priorität: 15.03.2002 DE 10211421; 14.06.2002 DE 10226770; 09.10.2002 DE 10247076
(71) Anmelder: Soehnle-Waagen GmbH & Co. KG, 71540 Murrhardt (DE)
(72) Erfinder: Schurr, Michael, 71540 Murrhardt (DE); Leber, Klaus, 65623 Hahnstätten (DE)

(57) **Zusammenfassung**

Die Erfindung betrifft ein balkenförmiges Kraftmeßelement 1 für eine Waage, das an seinem ersten Endbereich 2 abstützbar und an seinem zweiten Endbereich 4 mit einer zu messenden Last beaufschlagbar ist, wobei in einem in etwa mittig zwischen den Endbereichen 2, 4 angeordneten, eine Meßstelle bildenden Zentralbereich eine von einer quer verlaufenden Ausnehmung 16 gebildete Querschnittsschwächung vorhanden ist, wobei der Zentralbereich 6 eine größere Höhe h6 aufweist als zumindest einer der Endbereiche 2, 4 und wobei sich in einem Übergangsbereich 18, 20 ausgehend vom Zentralbereich 6 in Richtung auf den Endbereich 2, 4 sowohl die Ober- als auch die Unterseite 8, 10 des Kraftmeßelementes aneinander annähern. Darüber hinaus betrifft die Erfindung eine Waage 46 mit einem solchen Kraftmeßelement 1 (Fig. 3).

## Beschreibung

Die Erfindung betrifft ein balkenförmiges Kraftmeßelement für eine Waage, das an seinem ersten Endbereich abstützbar und an seinem zweiten Endbereich mit einer zu messenden Last beaufschlagbar ist, wobei in einem in etwa mittig zwischen den Endbereichen angeordneten, eine Meßstelle bildende Zentralbereich eine von einer quer verlaufenden Ausnehmung gebildete Querschnittsschwächung vorhanden ist. Außerdem betrifft die Erfindung eine Waage mit einem solchen Kraftmeßelement.

Ein derartiges Kraftmeßelement, das auch als Wägezelle oder Kraftaufnehmer bezeichnet wird, ist allgemein bekannt. Dabei ist das Kraftmeßelement zwischen einem Grundträger einerseits und einer Lastplatte andererseits eingespannt. Bei einer Krafteinwirkung auf die Lastplatte entstehen Dehnungen in dem Kraftmeßelement, die durch Dehnungsmeßstreifen erfaßt werden. Das bekannte Kraftmeßelement ist sowohl mit dem Grundträger als auch mit der Lastplatte mittels Schrauben verbunden. Durch für eine feste Verbindung erforderliche hohe Vorspannkräfte der Schrauben entstehen Materialdehnungen in dem Kraftmeßelement, die von den Dehnungsmeßstreifen als Störsignal erfaßt werden. Dadurch wird die Meßgenauigkeit des Kraftmeßelements erheblich beeinträchtigt; denn eine Änderung des Belastungsfalls zieht eine Änderung der Schraubenvorspannkräfte nach sich, woraus unmittelbar eine Dehnungsänderung des Kraftmeßelements folgt.

Um eine Wägezelle mit hoher Meßgenauigkeit zu erhalten, ist es daher erforderlich, die Befestigungseinflüsse zu reduzieren. Dafür sind verschiedene Lösungsvorschläge denkbar. Zum einen könnten Befestigungseinflüsse beispielsweise durch eine Verlängerung der Wägezelle vermindert werden, so daß durch eine dann mögliche Vergrößerung des Abstandes zwischen den Befestigungsstellen mit dem Grundträger einerseits und der Lastplatte andererseits Materialdehnungen in der Wägezelle abbaubar wären. Nachteilig bei einer solchen Lösung sind ein erhöhter Materialbedarf, eine Vergrößerung des Einbauraums und ein Anstieg der Biegebeanspruchung in der Wägezelle.

Zum anderen ist es denkbar, an der Wägezelle zwischen dem Bereich, in dem sich die Dehnungsmeßstreifen befinden, und den Befestigungsstellen mit Grundträger und Lastplatte Entlastungskerben anzubringen. Von Nachteil ist dabei jedoch ein insgesamt hoher Materialverbrauch und eine aufwendige Herstellung einer entsprechenden Wägezelle, da für die Entlastungskerben zusätzliche, spanende Bearbeitungsgänge durchgeführt werden müssen.

Des weiteren ist es vorstellbar, die Wägezelle an den Befestigungsstellen mit Grundträger und Lastplatte mit größerer Materialstärke auszubilden als in dem Bereich, in dem die Dehnungsmeßstreifen angeordnet sind. Auf diese Weise könnten die Befestigungsbereiche der Wägezelle versteift und somit die aus Befestigungseinflüssen herrührenden Spannungen reduziert werden. Bei einer solchen Lösung ergäbe sich aber der Nachteil eines erhöhten Materialbedarfs und einer erheblichen Gewichtszunahme der Wägezelle.

Vorliegender Erfindung liegt daher die Aufgabe zugrunde, ein balkenförmiges Kraftmeßelement der eingangs genannten Art zu schaffen, das eine hohe Meßgenauigkeit bei gleichzeitig nur geringem Materialbedarf und einfacher, kostengünstiger Herstellbarkeit aufweist. Darüber hinaus besteht die Aufgabe, eine präzise messende, kostengünstige Waage zu schaffen.

Die erstgenannte Aufgabe wird in überraschender Weise dadurch gelöst, daß der Zentralbereich eine größere Höhe aufweist als zumindest einer der Endbereiche und daß sich in einem Übergangsbereich ausgehend vom Zentralbereich in Richtung auf den jeweiligen Endbereich sowohl die Ober- als auch die Unterseite des Kraftmeßelementes aneinander annähern. Somit weist der Zentralbereich eine größere Höhe auf als der das Kraftmeßelement abstützende Endbereich und/oder der Endbereich, über den die zu messende Kraft in das Kraftmeßelement einleitbar ist. Die in den Endbereichen entstehenden hohen Materialdehnungen werden folglich am Übergang von den Wägezellenenden zu der eine größere Höhe aufweisenden Meßstelle gebrochen. Die Auswirkungen der in den Endbereichen auftretenden Verspannungen auf die Meßstelle werden auf diese Weise erheblich reduziert und führen nicht mehr zu signifikanten Meßfehlem. Das Kraftmeßelement weist damit eine besonders hohe Meßgenauigkeit auf und kann dennoch besonders kompakt und leicht ausgebildet werden. Außerdem ist eine aufwendige Bearbeitung während der Herstellung des Kraftmeßelementes nicht mehr erforderlich.

Man könnte sich vorstellen, daß der Übergang vom Endbereich zum Zentralbereich sprunghaft als senkrechter Absatz ausgeführt wird. Gemäß einer vorteilhaften Weiterbildung der Erfindung verringert sich aber die Höhe des Übergangsbereichs ausgehend vom Zentralbereich in Richtung auf den jeweiligen Endbereich kontinuierlich, wodurch weiterer Werkstoff für das Kraftmeßelement eingespart werden kann.

Die Endbereiche der Wägezelle könnten beispielsweise in einfacher Weise als Anschlußlaschen ausgebildet sein. Von besonderem Vorteil für variable Einsatzmöglichkeiten der Wägezelle und eine Verringerung der Bauteilanzahl ist es hingegen, wenn gemäß einer anderen Weiterbildung der Erfindung der erste und/oder der zweite Endbereich als Sockel zur Verbindung mit einem Grundträger oder einer Lastplatte ausgebildet ist. An den Sockel ist dann unmittelbar der Grundträger, an dem das Kraftmeßelement abstützbar ist, beziehungsweise die Lastplatte, auf der die zu messende Last anzuordnen ist, anschließbar. Zur weiteren Erhöhung der Meßgenauigkeit ist dabei zwischen Übergangsbereich und Sockel vorteilhaft eine Entlastungskerbe angeordnet.

Für die Ausbildung des Zentralbereichs als Meßstelle sind grundsätzliche beliebige Lösungen denkbar. Gemäß einer vorteilhaften Weiterbildung der Erfindung weist der Zentralbereich hingegen ein Meßelement (d.h. mindestens ein, es können auch mehrere sein) für Spannungen und/oder Dehnungen auf, wodurch in einfacher Weise die an der Oberfläche des balkenförmigen Kraftmeßelements aufgrund der Belastung mit der zu messenden Last entstehenden Spannungen und/oder Dehnungen als Maß für das Gewicht der Last erfaßt werden können. Eine hohe Meßgenauigkeit bei gleichzeitiger Herstellmöglichkeit des Kraftmeßelements auch in großen Serien zu geringen Kosten wird gemäß einer Weiterbildung der Erfindung vorteilhaft dann erreicht, wenn das Meßelement als Dehnungsmeßstreifen (DMS) ausgebildet ist.

Das Kraftmeßelement könnte beispielsweise mittels formschlüssiger Verbindungen lösbar in eine Waage eingebaut sein oder zum Beispiel auch unlösbar mit einem Grundträger und/oder einer Lastplatte verbunden sein. Dies erfordert jedoch einen großen Aufwand, eine hohe Präzision beim Bau der Waage. Von besonderem Vorteil für einen variablen Einsatz des Kraftmeßelements gemäß der Erfindung und seine leichte Einbau- und Austauschbarkeit wird nach einer vorteilhaften Weiterbildung der Erfindung dann erreicht, wenn die Endbereiche Ausnehmungen zur Aufnahme von Befestigungselementen aufweisen. Diese Befestigungselemente können vorzugsweise Schrauben sein, wodurch eine kostengünstige und lösbare Verbindung des Kraftmeßelements mit dem Grundträger und der Lastplatte möglich wird.

Das Kraftmeßelement ist mit großer Präzision und zu sehr geringen Kosten herstellbar, wenn es im wesentlichen aus einem stranggepressten Metallprofil besteht; "im wesentlichen" bedeutet dabei, daß lediglich Einzelelemente wie beispielsweise Dehnungsmeßstreifen oder Bohrungen zusätzlich an dem Metallprofil anzubringen sind.

Der zweite Teil der oben genannten Aufgabe wird gelöst durch eine Waage mit einem balkenförmigen Kraftmeßelement, das an seinem ersten Endbereich abstützbar und an seinem zweiten Endbereich mit einer zu messenden Last beaufschlagbar ist, wobei in einem in etwa mittig zwischen den Endbereichen angeordneten, eine Meßstelle bildenden Zentralbereich eine von einer quer verlaufenden Ausnehmung gebildete Querschnittsschwächung vorhanden ist, wobei der Zentralbereich eine größere Höhe aufweist als zumindest einer der Endbereiche und wobei sich in einem Übergangsbereich ausgehend vom Zentralbereich in Richtung auf den Endbereich sowohl die Ober- als auch die Unterseite des Kraftmeßelementes aneinander annähern, wobei der erste Endbereich des Kraftmeßelementes mit einem Grundträger und der zweite Endbereich mit einer Lastplatte verbunden ist. Eine solche Waage weist zum einen eine besonders hohe Meßgenauigkeit auf und besteht zum anderen aus nur wenigen Bauteilen. Dadurch ergibt sich eine hohe Betriebssicherheit und eine einfache, kostengünstige Herstellbarkeit. Gemäß einer vorteilhaften Weiterbildung der Erfindung wird die Herstellung zusätzlich dadurch vereinfacht, daß das Kraftmeßelement mit dem Grundträger und mit der Lastplatte jeweils mittels einer Schraube verbunden ist.

Die Erfindung kann beliebig ausgeführt werden. Nachfolgend werden Ausführungsformen beispielhaft anhand der beigefügten Zeichnung näher beschrieben. Darin zeigt
- Fig. 1: eine erste Wägezelle in einer Seitenansicht,
- Fig. 2: die Wägezelle nach Fig. 1 in einer Draufsicht,
- Fig. 3: die Wägezelle nach Fig. 1 eingebaut in eine Waage und
- Fig. 4: eine Waage mit einer weiteren Wägezelle.

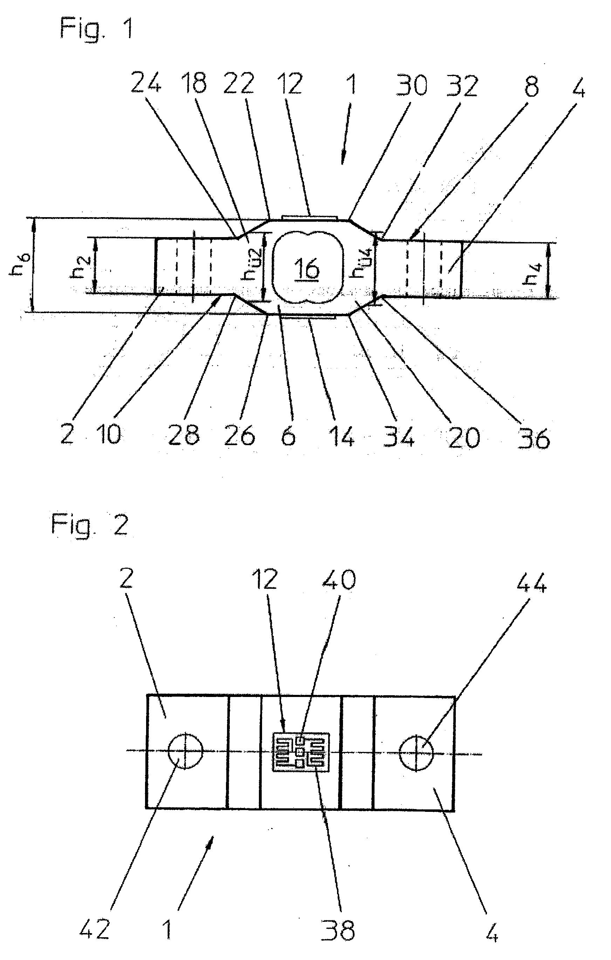

Fig. 1 zeigt in einer Seitenansicht ein balkenförmiges Kraftmeßelement 1 mit einem ersten Endbereich 2, an dem es abstützbar ist, und einem zweiten Endbereich 4, an dem das Kraftmeßelement 1 mit einer zu messenden Last beaufschlagbar ist. Ein Zentralbereich 6 des Kraftmeßelements 1 bildet eine Meßstelle und ist sowohl an der Oberseite 8 als auch an der Unterseite 10 des Kraftmeßelements 1 mit jeweils einem als Dehnungsmeßstreifen (DMS) ausgebildeten Meßelement 12, 14 versehen. Die Dehnungsmeßstreifen sind auf den Zentralbereich 6 aufgeklebt. Außerdem weist der Zentralbereich 6 eine in dem balkenförmigen Kraftmeßelement 1 quer verlaufende Ausnehmung 16 als Querschnittsschwächung auf. Die Ausnehmung muß nicht (wie dargestellt) durchgehend sein, sondern kann auch eine Materialschwächung anderer Art, z.B. ein Sackloch, sein.

Es ist Fig. 1 weiterhin zu entnehmen, daß der Zentralbereich 6 eine größere Höhe h6 aufweist als die Endbereiche 2, 4, die geringere Höhen h2, h4 besitzen. Zwischen dem Zentralbereich 6 und dem ersten Endbereich 2 befindet sich ein Übergangsbereich 18; ein weiterer Übergangsbereich 20 ist zwischen dem Zentralbereich 6 und dem zweiten Endbereich 4 angeordnet. In den Übergangsbereichen 18, 20 nähern sich ausgehend vom Zentralbereich 6 in Richtung auf den jeweiligen Endbereich 2, 4 sowohl die Oberseite 8 als auch die Unterseite 10 des Kraftmeßelementes aneinander an. Dadurch nimmt die Höhe hü2 des ersten Übergangsbereichs 18 in Richtung auf den ersten Endbereich 2 ab. Gleiches gilt für die Höhe hü4 für den zweiten Übergangsbereichs 20 in Richtung auf den zweiten Endbereich 4. In diesem Ausführungsbeispiel ändert sich die jeweilige Höhe hü2, hü4 der Übergangsbereiche 18, 20 ausgehend vom Zentralbereich in Richtung auf den jeweiligen Endbereich 2, 4 kontinuierlich und linear. Der erste Übergangsbereich 18 ist an der Oberseite 8 des Kraftmeßelementes 1 durch Kanten 22, 24 und an der Unterseite 10 durch Kanten 26, 28 gekennzeichnet. Gleiches gilt für Kanten 30, 32 an der Oberseite 8 und Kanten 34, 36 der Unterseite 10 des Kraftmeßelementes 1, die den zweiten Übergangsbereich 20 angeben. Die Übergangsbereiche 18, 20 könnten aber auch kontinuierlich, d.h. ohne Kanten, in den Zentralbereich 6 und die Endbereiche 2, 4 übergehen.

Eine Draufsicht auf das Kraftmeßelement 1 nach Fig. 1 ist in Fig. 2 dargestellt. Hier wie auch in den weiteren Figuren bezeichnen gleiche Bezugzeichen jeweils entsprechende Elemente. Es ist zu erkennen, daß das an der Oberseite angebrachte Meßelement 12 ein Dehnungsmeßstreifen (DMS) 38 ist. Anschlußkontakte 40 des Meßelements 12 dienen der elektrischen Verbindung mit einer hier nicht weiter dargestellten Auswerteelektronik. Sowohl der erste Endbereich 2 als auch der zweite Endbereich 4 weist eine Ausnehmung 42, 44 zur Aufnahme von Befestigungselementen, beispielsweise Schrauben, auf.

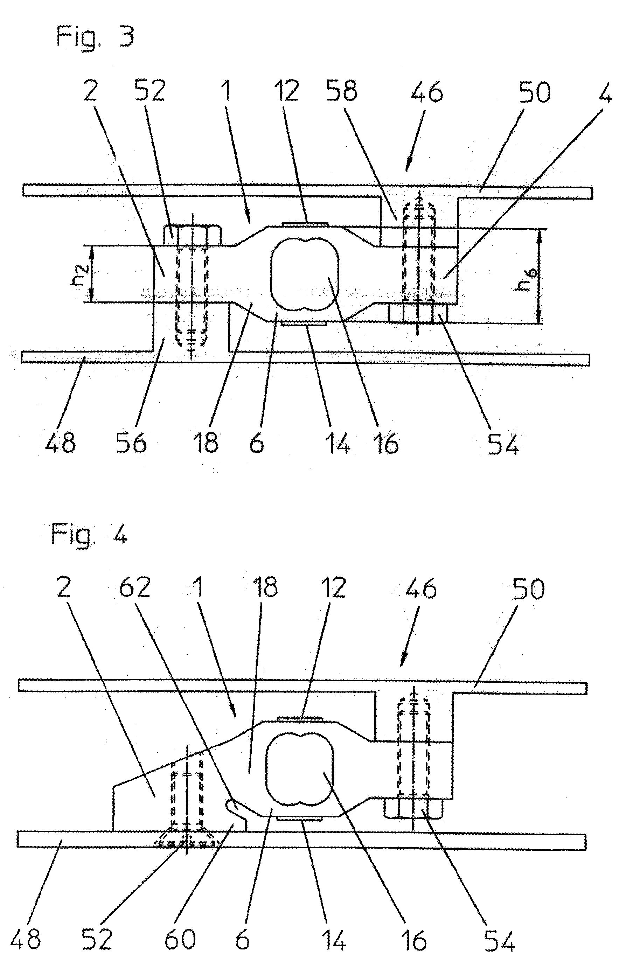

Fig. 3 zeigt die Wägezelle 1 im eingebauten Zustand in einer Waage 46. Die Waage 46 weist einen als Grundplatte ausgebildeten Grundträger 48 und eine Lastplatte 50 auf, wobei der Grundträger 48 mit dem ersten Endbereich 2 des Kraftmeßelementes 1 und die Lastplatte 50 mit dem zweiten Endbereich 4 verbunden ist. Die Verbindungen sind jeweils als Schraubverbindungen mit Schrauben 52, 54 ausgebildet. Die Schrauben 52, 54 durchgreifen die Ausnehmungen 42, 44 in den Endbereichen 2, 4 des Kraftmeßelementes 1 und sind in Aufnahmen 56, 58 eingeschraubt. Eine erste Aufnahme 56 ist dabei fest mit dem Grundträger 48 und eine zweite Aufnahme 58 fest mit der Lastplatte 50 verbunden.

Eine weitere Waage 46 ist in einer Seitenansicht in Fig. 4 dargestellt. Die Waage 46 weist eine Wägezelle 1 auf, die sich von derjenigen nach Fig. 1 bis 3 dadurch unterscheidet, daß ein erster Endbereich 2 des Kraftmeßelements 1 als Sockel 60 zur Verbindung mit einem als Grundplatte ausgebildeten Grundträger 48 ausgebildet ist. Zwischen einem ersten, zwischen einem Zentralbereich 6 und dem ersten Endbereich 2 angeordneten Übergangsbereich 18 und dem Sockel 60 ist eine Entlastungskerbe 62 vorgesehen. Der Sockel 60 des Kraftmeßelements 1 ist mittels einer Schraube 52 unmittelbar mit dem Grundträger 48 verschraubt. Eine Aufnahme 56 entsprechend dem Ausführungsbeispiel nach Fig. 3 kann hier somit entfallen.

### BEZUGSZEICHENLISTE

- 1: Kraftmeßelement
- 2: Endbereich
- 4: Endbereich
- 6: Zentralbereich
- 8: Oberseite
- 10: Unterseite
- 12: Meßelement
- 14: Meßelement
- 16: Ausnehmung
- 18: Übergangsbereich
- 20: Übergangsbereich
- 22: Kante
- 24: Kante
- 26: Kante
- 28: Kante
- 30: Kante
- 32: Kante
- 34: Kante
- 36: Kante
- 38: DMS
- 40: Anschlußkontakt
- 42: Ausnehmung
- 44: Ausnehmung
- 46: Waage
- 48: Grundträger
- 50: Lastplatte
- 52: Schraube
- 54: Schraube
- 56: Aufnahme
- 58: Aufnahme
- 60: Sockel
- 62: Entlastungkerbe

- h2: Höhe Endbereich
- h4: Höhe Endbereich
- h6: Höhe Zentralbereich
- hü2: Höhe Übergangsbereich
- hü4: Höhe Übergangsbereich

## Patentansprüche

1. Balkenförmiges Kraftmeßelement für eine Waage, das an seinem ersten Endbereich abstützbar und an seinem zweiten Endbereich mit einer zu messenden Last beaufschlagbar ist, wobei in einem in etwa mittig zwischen den Endbereichen angeordneten, eine Meßstelle bildenden Zentralbereich eine von einer quer verlaufenden Ausnehmung gebildete Querschnittsschwächung vorhanden ist, **dadurch gekennzeichnet, daß** der Zentralbereich (6) eine größere Höhe (h6) aufweist als zumindest einer der Endbereiche (2, 4) und daß sich in einem Übergangsbereich (18, 20) ausgehend vom Zentralbereich (6) in Richtung auf den Endbereich (2, 4) sowohl die Ober- (8) als auch die Unterseite (10) des Kraftmeßelementes (1) aneinander annähern.

2. Kraftmeßelement nach Anspruch 1, **dadurch gekennzeichnet, daß** sich die Höhe (hü2, hü4) des Übergangsbereichs (18, 20) ausgehend vom Zentralbereich (6) in Richtung auf den jeweiligen Endbereich (2, 4) kontinuierlich verringert.

3. Kraftmeßelement nach Anspruch 1 oder 2, **dadurch gekennzeichnet, daß** der erste und/oder der zweite Endbereich (2) als Sockel (60) zur Verbindung mit einem Grundträger (48) oder einer Lastplatte ausgebildet ist.

4. Kraftmeßelement nach Anspruch 3, **dadurch gekennzeichnet, daß** zwischen Übergangsbereich (18) und Sockel (60) eine Entlastungskerbe (62) angeordnet ist.

5. Kraftmeßelement nach einem der vorhergehenden Ansprüche, **dadurch gekennzeichnet, daß** der Zentralbereich (6) ein Meßelement (12, 14) für Spannungen und/oder Dehnungen aufweist.

6. Kraftmeßelement nach Anspruch 5, **dadurch gekennzeichnet, daß** das Meßelement (12) als Dehnungsmeßstreifen (DMS) (38) ausgebildet ist.

7. Kraftmeßelement nach einem der vorhergehenden Ansprüche, **dadurch gekennzeichnet, daß** die Endbereiche (2, 4) Ausnehmungen (42, 44) zur Aufnahme von Befestigungselementen aufweisen.

8. Kraftmeßelement nach einem der vorhergehenden Ansprüche, **dadurch gekennzeichnet, daß** es im wesentlichen aus einem stranggepreßten Metallprofil besteht.

9. Waage mit einem Kraftmeßelement nach einem der vorhergehenden Ansprüche, **dadurch gekennzeichnet, daß** der erste Endbereich (2) des Kraftmeßelementes (1) mit einem Grundträger (48) und der zweite Endbereich (4) mit einer Lastplatte (50) verbunden ist.

10. Waage nach Anspruch 9, **dadurch gekennzeichnet, daß** das Kraftmeßelement (1) mit dem Grundträger (48) und mit der Lastplatte (50) jeweils mittels einer Schraube (52, 54) verbunden ist.
